# EUROPEAN PATENT APPLICATION

(11) **EP 4 730 891 A1**
(43) Date of publication of application: **22.04.2026**
(21) Application number: 23941034.3
(22) Date of filing: 14.06.2023
(51) Int. Cl.: H04W 72/23, H04L 5/00

(54) **DOWNLINK COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/100302
(87) International publication number: WO 2024/254797

(57) **Abstract**

The present disclosure relates to a downlink communication method, apparatus and device, and a storage medium. The downlink communication method comprises: receiving first information, wherein the first information is used for configuring a channel measurement resource (CMR), and the CMR comprises N non-zero power channel state information reference signal (NZP CSI-RS) resources, N being a positive integer greater than 1; determining unified transmission configuration indication (TCI) states, which correspond to physical downlink shared channels (PDSCHs) and/or demodulation reference signals (DMRSs) corresponding to the PDSCHs, to be M sets of unified TCI states, M being a positive integer greater than 1, and M being less than or equal to N; and using the M sets of unified TCI states to receive the PDSCHs and/or the DMRSs corresponding to the PDSCHs. In the present disclosure, the number of NZP CSI-RS resources comprised in one channel measurement resource is configured to be multiple, and it is determined that a plurality of sets of unified TCI states are used to receive downlink channels or reference signals, thereby improving the communication performance of a downlink.

## Description

### TECHNICAL FIELD

The present disclosure relates to the communication technical field, and in particular to a downlink communication method and apparatus, a device and a storage medium.

### BACKGROUND

Currently, some solutions are discussing a Coherent Joint Transmission (CJT) based scheme for the Physical Downlink Shared Channel (PDSCH). For the same terminal, up to four Transmission and Reception Points (TRPs) can be supported to provide service(s) for the terminal at the same time.

### SUMMARY

To overcome problem(s) existing in related art, the present disclosure provides a downlink communication method and apparatus, a device and a storage medium.

According to a first aspect of an embodiment of the present disclosure, a downlink communication method is provided. The method includes: receiving first information, wherein the first information is used to configure a Channel Measurement Resource (CMR), the CMR includes N Non-Zero Power Channel State Information Reference Signal (NZP CSI-RS) resources, where N is a positive integer greater than 1; determining that a Unified Transmission Configuration Indication (TCI) state corresponding to a Physical Downlink Shared Channel (PDSCH) and/or a Demodulation Reference Signal (DMRS) corresponding to the PDSCH is M unified TCI states, where M is a positive integer greater than 1 and M is smaller than or equal to N; and receiving the PDSCH and/or the DMRS corresponding to the PDSCH using the M unified TCI states.

According to a second aspect of an embodiment of the present disclosure, a downlink communication method is provided. The method includes: sending first information, wherein the first information is used to configure a Channel Measurement Resource (CMR), and the CMR includes N Non-Zero Power Channel State Information Reference signal (NZP CSI-RS) resources, where N is a positive integer greater than 1; and sending a Physical Downlink Shared Channel (PDSCH) and/or a Demodulation Reference Signal (DMRS) corresponding to the PDSCH using M unified Transmission Configuration Indication (TCI) states, wherein M is a positive integer greater than 1, and M is smaller than or equal to N.

According to a third aspect of an embodiment of the present disclosure, a downlink communication apparatus is provided. The apparatus includes: a receiving module configured to receive first information, wherein the first information is used to configure a Channel Measurement Resource (CMR), the CMR includes N Non-Zero Power Channel State Information Reference Signal (NZP CSI-RS) resources, and N is a positive integer greater than 1; and a processing module configured to determine that a Unified Transmission Configuration Indication (TCI) state corresponding to a Physical Downlink Shared Channel (PDSCH) and/or a Demodulation Reference Signal (DMRS) corresponding to the PDSCH is M unified TCI states, where M is a positive integer greater than 1 and M is smaller than or equal to N; the receiving module is further configured to receive the PDSCH and/or the DMRS corresponding to the PDSCH using the M unified TCI states.

According to a fourth aspect of an embodiment of the present disclosure, a downlink communication apparatus is provided. The apparatus includes: a sending module configured send first information, wherein the first information is used to configure a Channel Measurement Resource (CMR), the CMR includes N Non-Zero Power Channel State Information Reference Signal (NZP CSI-RS) resources, and N is a positive integer greater than 1; the sending module is further configured to send a Physical Downlink Shared Channel (PDSCH) and/or a Demodulation Reference Signal (DMRS) corresponding to the PDSCH using M unified Transmission Configuration Indication (TCI) states, wherein M is a positive integer greater than 1, and M is smaller than or equal to N.

According to a fifth aspect of an embodiment of the present disclosure, a downlink communication device is provided. The device includes: a processor; and a memory configured to store instructions executable by the processor; the processor is configured to perform the method according to the first aspect or any one of implementations in the first aspect.

According to a sixth aspect of an embodiment of the present disclosure, a downlink communication device is provided. The device includes: a processor; and a memory configured to store instructions executable by the processor; the processor is configured to perform the method according to the second aspect or any one of implementations in the second aspect.

According to a seventh aspect of an embodiment of the present disclosure, a non-transitory computer-readable storage medium is provided. When instructions in the storage medium are executed by a processor of a terminal, the terminal is caused to be capable of performing the method according to the first aspect or any one of implementations in the first aspect.

According to an eighth aspect of an embodiment of the present disclosure, a non-transitory computer-readable storage medium is provided. When instructions in the storage medium are executed by a processor of a network device, the network device is caused to be capable of performing the method according to the second aspect or any one of implementations in the second aspect.

The technical solutions provided by the embodiments of the present disclosure can include the following beneficial effects: by configuring the channel measurement resource to include multiple non-zero power channel state information reference signal resources, and determining to use multiple unified TCI states to receive the downlink channel or reference signal, the communication performance of the downlink can be improved.

It should be understood that the above general description and the following detailed description are illustrative and explanatory only, and are not intended to limit the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a schematic diagram of a wireless communication system according to an example embodiment.
FIG. 2 is a flowchart of a downlink communication method according to an example embodiment.
FIG. 3 is a flowchart of another downlink communication method according to an example embodiment.
FIG. 4 is a flowchart of yet another downlink communication method according to an example embodiment.
FIG. 5 is a flowchart of yet another downlink communication method according to an example embodiment.
FIG. 6 is a flowchart of another downlink communication method according to an example embodiment.
FIG. 7 is a flowchart of yet another downlink communication method according to an example embodiment.
FIG. 8 is a flowchart of yet another downlink communication method according to an example embodiment.
FIG. 9 is a schematic diagram of a downlink communication apparatus according to an example embodiment.
FIG. 10 is a schematic diagram of another downlink communication apparatus according to an example embodiment.
FIG. 11 is a schematic diagram of a downlink communication device according to an example embodiment.
FIG. 12 is a schematic diagram of another downlink communication device according to an example embodiment.

### DETAILED DESCRIPTION

Example embodiments will now be described in detail, examples of which are illustrated in the accompanying drawings. When the following description refers to the drawings, the same numbers in different drawings denote the same or similar elements unless otherwise indicated. The implementations described in the following example embodiments do not represent all implementations consistent with the present disclosure.

Example embodiments will now be described in detail, examples of which are illustrated in the accompanying drawings. When the following description refers to the drawings, the same numbers in different drawings denote the same or similar elements unless otherwise indicated. The implementations described in the following example embodiments do not represent all implementations consistent with the present disclosure.

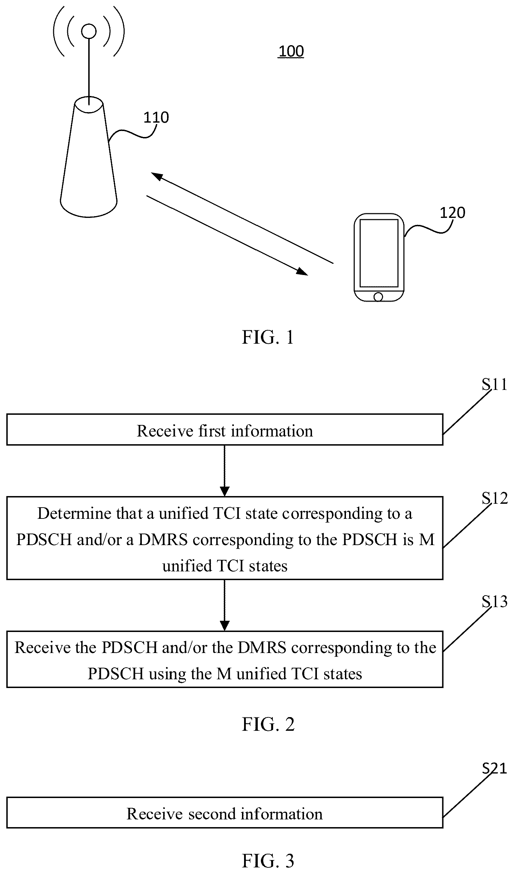

The communication method involved in the present disclosure may be applied to a wireless communication system 100 shown in FIG. 1. The network system may include a network device 110 and a terminal 120. It can be understood that the wireless communication system shown in FIG. 1 is merely an illustration of the wireless communication system, and the wireless communication system may further include other network devices, such as a core network device, a wireless relay device, and a wireless backhaul device, etc., which are not shown in FIG. 1. The embodiments of the present disclosure do not limit the number of network device(s) and terminal(s) included in the wireless communication system.

It can be further understood that the wireless communication system of the present disclosure is a network that provides wireless communication function(s). The wireless communication system may employ different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier-Frequency Division Multiple Access (SC-FDMA), or carrier sense multiple access with collision avoidance. Based on factors such as capacity, rate, or latency, etc., networks may be categorized as a second generation (2G) network, a third generation (3G) network, a fourth generation (4G) network, or a future evolved network, such as the 5th generation wireless communication system (5G) network. The 5G network may also be referred to as a New Radio (NR) network. For ease of description, the present disclosure sometimes refers to the wireless communication network simply as a network.

Furthermore, the network device 110 involved in the present disclosure may also include a radio access network device. The radio access network device may be: a base station, an evolved based station (evolved node B, eNB), a home base station, an Access Point (AP) in a Wireless Fidelity (WiFi) system, a wireless relay node, a wireless backhaul node, a Transmission Point (TP), or a TRP, etc. It may also be a gNB in the NR system, or a component constituting a base station or a part of a device, etc. When it is a vehicle-to-everything (V2X) communication system, the access network device may also be an in-vehicle device. It should be understood that the specific technology and specific device form employed by the access network device are not limited in the embodiments of the present disclosure.

Furthermore, the terminal 120 involved in the present disclosure may also be referred to as a terminal device, User Equipment (UE), a Mobile Station (MS), a Mobile Terminal (MT), etc., and is a device that provides voice and/or data connectivity to a user. For example, the terminal may be a handheld device with a wireless connection function, an in-vehicle device, etc. Currently, some examples of the terminal include: a smartphone (mobile phone), a Pocket Personal Computer (PPC), a handheld computer, a Personal Digital Assistant (PDA), a laptop computer, a tablet computer, a wearable device, or an in-vehicle device, etc. In addition, when it is a vehicle-to-everything (V2X) communication system, the terminal device may also be an in-vehicle device. It should be understood that the specific technology and specific device form employed by the terminal are not limited in the embodiments of the present disclosure.

In an embodiment of the present disclosure, the network device 110 and the terminal 120 may employ any feasible wireless communication technology to implement data transmission to each other. A transmission channel through which the network device 110 sends data to the terminal 120 is called a downlink (DL), and a transmission channel through which the terminal 120 sends data to network device 110 is called an uplink (UL). It can be understood that the network device involved in the embodiments of the present disclosure may be a base station. Of course, the network device may also be any other possible network device, and the terminal may be any possible terminal, and the present disclosure does not impose limitations on this.

Related solutions are discussing a CJT-based scheme for PDSCH, that is, up to four TRPs may be supported to provide service(s) to the same terminal simultaneously.

In some embodiments, a TRP may also be replaced by a TRP group. That is, a TRP group may include one or more TRPs. For ease of description, the embodiments of the present disclosure will be described using a TRP as an example, but it should be understood that the same applies to a TRP group, and the present disclosure does not impose limitations on this.

A network device or the terminal itself may determine how many TRPs are specifically used for sending to the terminal a PDSCH and/or a Demodulation Reference Signal (DMRS) corresponding to the PDSCH.

In some embodiments, the network device may configure one Channel Measurement Resource (CMR) for the terminal. Assuming that one CMR includes only one Non-Zero Power (NZP) Channel State Information Reference Signal (CSI-RS) resource, this means that the network device configures one TRP for the terminal for sending of the PDSCH and/or the DMRS corresponding to the PDSCH to the terminal. One NZP CSI-RS resource corresponds to one TRP. Therefore, one NZP CSI-RS resource may also be understood as one TRP. In this case, the terminal does not need to perform selection among the NZP CSI-RS resource. The terminal may directly perform Channel State Information (CSI) feedback for the one NZP CSI-RS resource included in the CMR. For example, the terminal may feed back a Space Domain (SD) basis vector selection indication, a Frequency Domain (FD) basis vector selection indication, non-zero coefficient reporting, rank reporting, etc.

In some embodiments, the network device may configure one CMR for the terminal. Assuming that one CMR includes multiple NZP CSI-RS resources (for example N NZP CSI-RS resources, where N is a positive integer greater than 1) and the network device indicates that the terminal does not need to perform further selection from the N NZP CSI-RS resources (that is, the network device indicates that the terminal does not need to select a part of NZP CSI-RS resources from the N NZP CSI-RS resources), the terminal may directly perform CSI feedback for the N NZP CSI-RS resources configured by the network device. The network device uses N TRPs corresponding to the N NZP CSI-RS resources to send the PDSCH and/or the DMRS corresponding to the PDSCH to the terminal.

In some embodiments, the network device may configure one CMR for the terminal. Assuming that one CMR includes multiple NZP CSI-RS resources (for example N NZP CSI-RS resources) and the network device does not indicate that the terminal does not need to perform further selection from the N NZP CSI-RS resources, the terminal may further select Q NZP CSI-RS resources from the N NZP CSI-RS resources, where Q is smaller than or equal to N. After selecting the Q NZP CSI-RS resources, the terminal may inform the network device which Q NZP CSI-RS resources are selected. For example, N bits may be used, i.e., each NZP CSI-RS resource may correspond to 1 bit for indication. A bit value of 1 indicates being selected, and a bit value of 0 indicates being not selected; alternatively, in other cases, a bit value of 0 may indicate being selected, and a bit value of 1 may indicate not being selected. The specific meaning of each bit value is not limited in the present disclosure, and the meaning may be adaptively adjusted depending on actual situations. The terminal may also simultaneously report the CSI obtained from channel measurements of the selected Q NZP CSI-RS resources.

In some cases, the terminal may determine, according to a configuration of the network device or a default rule, to use multiple unified Transmission Configuration Indication (TCI) states to receive the PDSCH and/or the DMRS corresponding to the PDSCH. A unified TCI state may also be called an indicated TCI state.

However, for a scenario where the one CMR configured by the network device includes multiple NZP CSI-RS resources, there may be a case that the terminal selects only one of the multiple NZP CSI-RS resources, but multiple unified TCI states are determined through a Radio Resource Control (RRC) configuration or the default rule. In this case, the network device cannot send the PDSCH and/or the DMRS corresponding to the PDSCH, and the terminal also cannot receive the PDSCH and/or the DMRS corresponding to the PDSCH.

Therefore, the present disclosure provides a downlink communication method that can improve the downlink communication performance by configuring multiple NZP CSI-RS resources included in a CMR and determining to use multiple unified TCI states to receive a downlink channel or a reference signal.

It should be noted that in the embodiments described below in the present disclosure, TRP is used as an example for detailed explanation only. Of course, in other embodiments, TRP can be replaced by TRP group, and the present disclosure does not limit this.

FIG. 2 is a flowchart of a downlink communication method according to an example embodiment. As shown in FIG. 2, the method may be performed by a terminal. The method may include the following steps:

In step S11, first information is received.

In some embodiments, the terminal may receive the first information. The first information is used to configure a CMR. The CMR includes N NZP CSI-RS resources, where N is a positive integer greater than 1.

In some embodiments, the first information may be referred to as indication information, first indication information, configuration information, resource configuration information, etc., and the present disclosure does not limit the name of the first information.

In some embodiments, the terminal may receive the first information sent by the network device. The first information configures N NZP CSI-RS resources included in a CMR. Based on the first information, the terminal determines the N NZP CSI-RS resources included in a CMR configured by the network device.

In some embodiments, the terminal is configured with a PDSCH CJT scheme. The CJT scheme may include the following: a CMR configured by the network device includes N NZP CSI-RS resources, where N is a positive integer greater than 1, and one NZP CSI-RS resource corresponds to one TRP or one TRP group.

It can be understood that N being greater than 1 indicates that a CMR includes multiple NZP CSI-RS resources. In other words, one CMR corresponds to multiple TRPs or multiple TRP groups. In this case, CJT uses a M-TRP communication.

Alternatively, in some other embodiments, the CJT scheme may include the following: at least one of multiple CMRs configured by the network device includes N NZP CSI-RS resources.

For example, N may typically be 1, 2, 3, or 4. That is, a CMR usually includes one to four NZP CSI-RS resources.

For example, in a case that N is greater than 1, the network device configures a corresponding restriction. For example, the network device configures an indication that the terminal does not need to perform selection. In this case, the terminal does not need to select one or more NZP CSI-RS resources from the N NZP CSI-RS resources. The network device uses TRPs corresponding to the N NZP CSI-RS resources to send the PDSCH and/or the DMRS corresponding to the PDSCH to the terminal. The terminal only needs to perform CSI feedback for the N NZP CSI-RS resources.

For another example, in a case that N is greater than 1, the network device does not configure a restriction. In this case, the terminal may select one or more NZP CSI-RS resources from the N NZP CSI-RS resources. For example, the terminal selects Q NZP CSI-RS resources from the N NZP CSI-RS resources. It can be understood that Q is a positive integer, and Q is smaller than or equal to N. The terminal may send information to the network device indicating which Q NZP CSI-RS resources the terminal has selected, thus informing the network device of the selected NZP CSI-RS resources. The network device may send the PDSCH and/or the DMRS corresponding to the PDSCH to the terminal based on the TRPs corresponding to the Q NZP CSI-RS resources. The terminal only needs to provide CSI feedback for the Q NZP CSI -RS resources.

It can be understood that when a CMR configured by the network device includes N NZP CSI-RS resources, it can be considered that the terminal uses the CJT scheme.

In some embodiments, the CJT scheme may include: independently feeding back a space domain basis vector for each NZP CSI-RS resource.

For example, the terminal independently feeds back a space domain basis vector for each NZP CSI-RS resource. That is, the terminal selects a specified number of H beams from the total number of CSI-RS ports N1*N2, where H is a positive integer, N1 represents the number of ports in a first dimension, and N2 represents the number of ports in a second dimension.

It can be understood that when the terminal independently feeds back the space domain basis vector for each NZP CSI-RS resource, it can be considered that the terminal uses the CJT scheme.

In some embodiments, the CJT scheme may include: independently feeding back a frequency domain basis vector for each NZP CSI-RS resource.

For example, the terminal independently feeds back a frequency domain basis vector for each NZP CSI-RS resource. That is, for each NZP CSI-RS resource, the terminal selects v frequency domain basis vectors from N3 frequency domain basis vectors, where v is a positive integer, and N3 represents a product of the number of Channel Quality Indicator (CQI) subbands and the number of Precoding Matrix Indicator (PMI) subbands.

It can be understood that when the terminal independently feeds back the frequency domain basis vector for each NZP CSI-RS resource, it can be considered that the terminal uses the CJT scheme.

In some embodiments, the CJT scheme may include: feeding back the same frequency domain basis vector for each NZP CSI-RS resource.

For example, the terminal feeds back same frequency domain basis vector(s) for each NZP CSI-RS resource. That is, for each NZP CSI-RS resource, the terminal selects same v frequency domain basis vectors from the N3 frequency domain basis vectors.

It can be understood that when the terminal feeds back the same frequency domain basis vector(s) for each NZP CSI-RS resource, it can be considered that the terminal has adopted the CJT scheme.

In some embodiments, CJT scheme may include: configuring multiple TRPs or multiple TRP groups by the network device. It can be understood that each TRP or each TRP group corresponds to one NZP CSI-RS resource.

It can be understood that when the network device configures multiple TRPs or multiple TRP groups, it can be considered that the terminal uses the CJT scheme.

In step S12, unified TCI state(s) corresponding to a PDSCH and/or a DMRS corresponding to PDSCH is(are) determined to be M unified TCI states.

In some embodiments, the terminal may determine the M unified TCI states corresponding to the PDSCH and/or the DMRS corresponding to the PDSCH, where M is a positive integer greater than 1, and M is smaller than or equal to N.

For example, the terminal may determine M unified TCI states. The M unified TCI states may be used for the terminal to receive the PDSCH and/or the DMRS corresponding to the PDSCH sent by a part or all of N TRPs corresponding to the N NZP CSI-RS resources.

For example, there are N TRPs corresponding to N NZP CSI-RS resources. The network device may use a part or all of the N TRPs to send the PDSCH and/or the DMRS corresponding to the PDSCH to the terminal. The terminal may determine M unified TCI states. The M unified TCI states may be used for the terminal to receive the PDSCH and/or the DMRS corresponding to the PDSCH sent from different TRPs, respectively.

In some embodiments, the M unified TCI states are two unified TCI states.

In step S13, the PDSCH and/or the DMRS corresponding to the PDSCH is(are) received using the M unified TCI states.

In some embodiments, the terminal may use the M unified TCI states determined in step S12 to receive the PDSCH and/or the DMRS corresponding to PDSCH.

For example, the terminal uses the determined M unified TCI states to receive the PDSCH and/or the DMRS corresponding to PDSCH sent from different TRPs, respectively. In other words, the terminal uses one unified TCI state among the M unified TCI states to receive the PDSCH and/or the DMRS corresponding to the PDSCH sent by a certain TRP. The unified TCI states used for the terminal to receive the PDSCH and/or DMRS corresponding to PDSCH sent by different TRPs may be the same or different.

It can be understood that by configuring a CMR to include multiple NZP CSI-RS resources and configuring the terminal to use multiple unified TCI states to receive the PDSCH and/or the DMRS corresponding to the PDSCH sent by different TRPs, the present disclosure can avoid the situation where a CMR configures only one NZP CSI-RS resource but multiple unified TCI states are determined.

In the present disclosure, by configuring a CMR to include multiple NZP CSI-RS resources and determining to use multiple unified TCI states to receive a downlink channel or reference signal, the downlink communication performance can be improved.

In the downlink communication method provided by an embodiment of the present disclosure, FIG. 3 is a flowchart of another downlink communication method according to an example embodiment. As shown in FIG. 3, the method further includes the following step:

In step S21, second information is received.

In some embodiments, the terminal may further receive second information. The second information is used to determine K unified TCI states. The M unified TCI states may be a subset of the K unified TCI states, where K is a positive integer greater than 1.

For example, the terminal receives the second information sent by the network device. The second information indicates the K unified TCI states. Based on the second information, the terminal determines the K unified TCI states configured by the network device.

For example, the terminal directly determines the M unified TCI states based on the second information, meaning that the K unified TCI states determined through the second information are equal to the M unified TCI states. In other words, K may be equal to M.

For example, the M unified TCI states are a proper subset of the K unified TCI states, that is, the terminal determines K unified TCI states based on the second information. The K unified TCI states are more than the M unified TCI states. The terminal determines the M unified TCI states from the K unified TCI states. In other words, K is greater than M.

In some embodiments, the K unified TCI states determined through the second information are two unified TCI states, i.e., K is equal to 2.

In the present disclosure, the network device indicates the use of multiple unified TCI states to receive a downlink channel or reference signal, thereby improving downlink communication performance in a case that a CMR is configured to include multiple NZP CSI-RS resources.

In the downlink communication method provided in an embodiment of the present disclosure, the second information is used to indicate the K unified TCI states.

In some embodiments, the second information may indicate the K unified TCI states.

For example, a piece of second information may directly indicate the K unified TCI states. Based on the received piece of second information, the terminal may directly determine the K unified TCI states.

For example, the terminal may determine, based on the most recently received second information, the K unified TCI states indicated by the most recently received second information.

For example, assuming that the K unified TCI states indicated by the second information are two unified TCI states, the terminal may determine, based on the most recently received second information, the two unified TCI states indicated by the most recently received second information.

The present disclosure can directly indicate multiple unified TCI states through a piece of second information, so that in a case that the number of NZP CSI-RS resources included in a CMR is configured as multiple, the multiple unified TCI states can be used to receive a downlink channel or reference signal, thereby improving downlink communication performance.

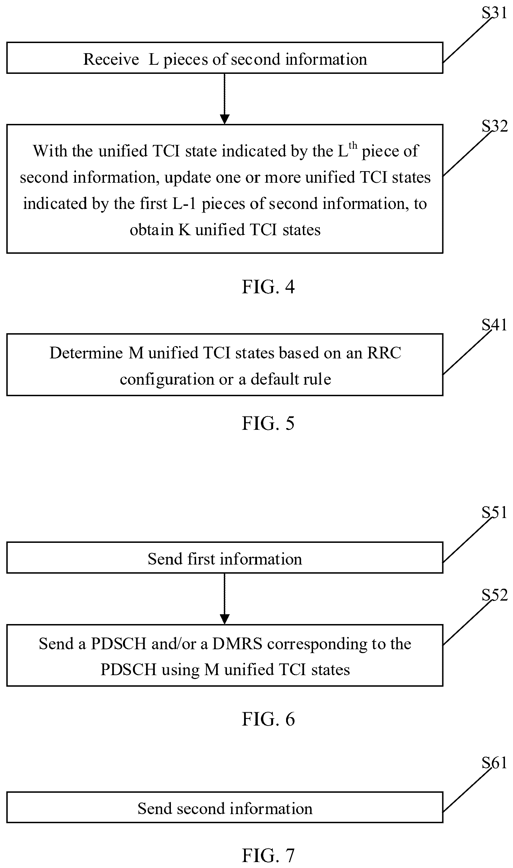

In the downlink communication method provided in an embodiment of the present disclosure, FIG. 4 is a flowchart of another downlink communication method according to an example embodiment. As shown in FIG. 4, receiving the second information may further include the following steps:
In step S31, L pieces of second information are received.

In some embodiments, the terminal may receive multiple pieces of second information, such as L pieces of second information, where L is a positive integer greater than 1. The first L-1 pieces of second information are used to indicate one or more unified TCI states, and the L^{th} piece of second information is used to indicate one unified TCI state.

For example, the terminal receives L pieces of second information. The L^{th} piece of second information is used to indicate one unified TCI state. The first L-1 pieces of second information may indicate one or more unified TCI states, respectively.

For example, L pieces of second information may be three pieces of second information: second information 1, second information 2, and second information 3. The second information 1 may indicate a unified TCI state, i.e., unified TCI state 1. The second information 2 may indicate a unified TCI state, i.e., unified TCI state 2. The second information 3 may indicate a unified TCI state, i.e., a new unified TCI state 2. Alternatively, the second information 1 may indicate a unified TCI state, i.e., unified TCI state 1. The second information 2 may indicate two unified TCI states, i.e., unified TCI state 2 and unified TCI state 3. The second information 3 may indicate a unified TCI state, i.e., a new unified TCI state 2. As a further example, the second information 1 may indicate two unified TCI states, i.e., unified TCI state 1 and unified TCI state 2. The second information 2 may indicate two unified TCI states, i.e., unified TCI state 3 and unified TCI state 4. The second information 3 may indicate a unified TCI state, i.e., a new unified TCI state 2.

In some embodiments, the method further includes the following step:

In step S32, the unified TCI state indicated by the L^{th} piece of second information is used to update one or more unified TCI states indicated by the first L-1 pieces of second information, to obtain K unified TCI states.

In some embodiments, the terminal may use the unified TCI state indicated by the L^{th} piece of second information to update one or more unified TCI states indicated by the first L-1 pieces of second information, so as to obtain the K unified TCI states.

For example, L pieces of second information may be three pieces of second information: second information 1, second information 2, and second information 3. The second information 1 may indicate a unified TCI state, i.e., a unified TCI state 1. The second information 2 may indicate a unified TCI state, i.e., unified TCI state 2. The second information 3 may indicate, a unified TCI state, i.e., a new unified TCI state 2. In this case, the terminal may determine that the unified TCI states indicated by the first two pieces of second information are unified TCI state 1 and unified TCI state 2. The terminal uses the new unified TCI state 2 indicated by second information 3 to update the unified TCI state 2 determined through the first two pieces of second information, to obtain the K updated unified TCI states, i.e., unified TCI state 1 and the new unified TCI state 2.

For example, L pieces of second information may be three pieces of second information: second information 1, second information 2, and second information 3. The second information 1 may indicate a unified TCI state, i.e., unified TCI state 1. The second information 2 may indicate two unified TCI states, i.e., unified TCI state 2 and unified TCI state 3. The second information 3 may indicate a unified TCI state, i.e., a new unified TCI state 2. In this case, the terminal may determine that the unified TCI states indicated by the first two pieces of second information are unified TCI state 1, unified TCI state 2, and unified TCI state 3. The terminal uses the new unified TCI state 2 indicated by second information 3 to update the unified TCI state 2 determined through the first two pieces of second information, to obtain K updated unified TCI states: unified TCI state 1, the new unified TCI state 2, and unified TCI state 3.

For another example, L pieces of second information may be three pieces of second information: second information 1, second information 2, and second information 3. The second information 1 may indicate a unified TCI state, i.e., unified TCI state 1. The second information 2 may indicate two unified TCI states, i.e., unified TCI state 2 and unified TCI state 3. The second information 3 may indicate a unified TCI state, i.e., unified TCI state 4. In this case, the terminal may determine that the unified TCI states indicated by the first two pieces of second information are unified TCI state 1, unified TCI state 2, and unified TCI state 3. The terminal uses the unified TCI state 4 indicated by second information 3 to update the unified TCI states determined through the first two pieces of second information to obtain K updated unified TCI states, i.e., unified TCI state 1, unified TCI state 2, unified TCI state 3, and unified TCI state 4.

It can be understood that in the above examples, in a case that the L^{th} piece of second information indicates only one unified TCI state, the terminal uses the unified TCI state indicated by the L^{th} piece of second information to update a unified TCI state corresponding to the unified TCI state indicated by the L^{th} piece of second information among one or more unified TCI states determined through the first L-1 pieces of second information, and the remaining unified TCI state(s) may remain unchanged.

The present disclosure can indicate multiple unified TCI states through multiple pieces of second information, so that in a case that the number of NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, the second information is carried by a first Medium Access Control Control Element (MAC CE). At least one unified TCI state indicated by the first MAC CE corresponds to a codepoint in a TCI state indication field carried in Downlink Control Information (DCI).

In some embodiments, the second information is carried by a first MAC CE. The first MAC CE may indicate at least one unified TCI state. The at least one unified TCI state indicated by the MAC CE may correspond to a codepoint in a TCI state indication field carried in the DCI.

The present disclosure provides a possible implementation of the second information. Thus, in a case that the number of NZP CSI-RS resources included in a CMR is configured as multiple, the multiple unified TCI states determined through the second information are used to receive a downlink channel or reference signal, thereby improving downlink communication performance.

In the downlink communication method provided in an embodiment of the present disclosure, the second information is carried by a second MAC CE and a DCI. The second MAC CE is used to indicate at least one unified TCI state corresponding to each of multiple codepoints corresponding to a TCI state indication field carried in the DCI. The TCI state indication field carried in the DCI is used to indicate one of the multiple codepoints.

In some embodiments, the second information is carried by a second MAC CE and a DCI. The second MAC CE may indicate at least one unified TCI state corresponding to each of the multiple codepoints. The multiple codepoints may be multiple codepoints that may exist in the TCI state indication field carried in the DCI. The TCI state indication field carried in the DCI may indicate one of the multiple codepoints, thereby indicating at least one unified TCI state corresponding to the codepoint.

The present disclosure provides a possible implementation of the second information. Thus, in a case that the number of NZP CSI-RS resources included in a CMR is configured as multiple, multiple unified TCI states determined through the second information are used to receive a downlink channel or reference signal, thereby improving downlink communication performance.

In the downlink communication method provided in an embodiment of the present disclosure, FIG. 5 is a flowchart of yet another downlink communication method according to an example embodiment. As shown in FIG. 5, the method may further include the following step:

In step S41, the M unified TCI states are determined based on an RRC configuration or a default rule.

In some embodiments, the terminal may determine the M unified TCI states based on an RRC configuration or a default rule.

For example, in a case that the terminal cannot determine the unified TCI state(s) corresponding to the PDSCH and/or the DMRS corresponding to PDSCH based on DCI, the terminal may determine the M unified TCI states based on the RRC configuration or the default rule.

For example, the terminal may receive, in advance, RRC signaling sent by the network device. The RRC signaling configures that the terminal receives the PDSCH and/or the DMRS corresponding to the PDSCH based on the M unified TCI states. The M unified TCI states configured in the RRC signaling are the M unified TCI states among the K unified TCI states determined through the second information. In a case that the terminal cannot determine the unified TCI state(s) corresponding to the PDSCH and/or the DMRS corresponding to the PDSCH based on the DCI, the terminal may determine the M unified TCI states based on the RRC signaling.

For another example, the default rule may predefine that the terminal receives the PDSCH and/or the DMRS corresponding to the PDSCH based on the M unified TCI states. The M unified TCI states predefined by the default rule are the M unified TCI states among the K unified TCI states determined through the second information. In a case that the terminal cannot determine the unified TCI state(s) corresponding to the PDSCH and/or the DMRS corresponding to the PDSCH based on the DCI, the terminal may determine the M unified TCI states based on the default rule.

The present disclosure can determine multiple unified TCI states through the RRC configuration or the default rule. Thus, in a case that the number of NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, the PDSCH and/or the DMRS corresponding to the PDSCH are at least one of the following: the PDSCH scheduled based on DCI (format) 1_0 and/or the DMRS corresponding to the PDSCH; the PDSCH scheduled based on a first DCI and/or the DMRS corresponding to the PDSCH, where a TCI state selection field in the first DCI is configured not to be present, and a DCI format corresponding to the first DCI is DCI format 1_1 or DCI format 1_2; the PDSCH scheduled based on a second DCI and/or the DMRS corresponding to the PDSCH, where a time interval between the second DCI and the PDSCH and/or the DMRS corresponding to the PDSCH is smaller than a time threshold, and the DCI format corresponding to the second DCI is DCI format 1_0, DCI format 1_1, or DCI format 1_2.

In some embodiments, the PDSCH and/or the DMRS corresponding to the PDSCH may be: the PDSCH scheduled based on DCI format 1_0 and/or the DMRS corresponding to the PDSCH. In other words, the PDSCH is a PDSCH scheduled through DCI format 1_0; and/or, the DMRS corresponding to the PDSCH is the DMRS corresponding to the PDSCH scheduled through DCI format 1_0.

For example, the network device configures a PDSCH scheduled based on DCI format 1_0 and/or the DMRS corresponding to the PDSCH. In this case, this type of DCI does not include a TCI state selection field. The TCI state selection field is used to indicate TCI state(s) corresponding to the PDSCH and/or the DMRS corresponding to the PDSCH. That is, this type of DCI cannot indicate the TCI state(s) corresponding to the PDSCH and/or the DMRS corresponding to the PDSCH. Therefore, the terminal cannot determine the M unified TCI states based on DCI format 1_0. The terminal may determine the M unified TCI states based on the RRC configuration or the default rule.

In some embodiments, in a case that the PDSCH is the PDSCH scheduled through DCI format 1_0, and/or the DMRS corresponding to the PDSCH is the DMRS corresponding to the PDSCH scheduled through DCI format 1_0, the terminal may support receiving the PDSCH and/or the DMRS corresponding to the PDSCH using a default beam. The terminal may determine the M unified TCI states based on the RRC configuration or the default rule.

In some embodiments, for the PDSCH scheduled through DCI format 1_0 and/or the DMRS corresponding to PDSCH, the terminal may determine which one or more unified TCI states to use for receiving the PDSCH and/or the DMRS corresponding to the PDSCH based on the RRC configuration. Of course, in some cases, if RRC does not indicate the unified TCI state(s), the terminal may directly use the first unified TCI state. The first unified TCI state may be one of the M unified TCI states.

For example, it is pre-configured that a certain unified TCI state may be used as the first unified TCI state by default. In a case that the RRC does not indicate unified TCI state(s), the terminal directly uses the first unified TCI state to receive the PDSCH and/or the DMRS corresponding to the PDSCH.

In some embodiments, the PDSCH and/or the DMRS corresponding to the PDSCH may be: the PDSCH scheduled based on the first DCI and/or the DMRS corresponding to PDSCH. In other words, the PDSCH is a PDSCH scheduled through the first DCI; and/or, the DMRS corresponding to PDSCH is the DMRS corresponding to PDSCH scheduled through the first DCI. The TCI state selection field in the first DCI is configured not to be present, and the DCI format corresponding to the first DCI is DCI format 1_1 or DCI format 1_2.

For example, the network device configures the PDSCH scheduled based on DCI format 1_1 or DCI format 1_2 and/or the DMRS corresponding to the PDSCH. The TCI state selection field in DCI format 1_1 or DCI format 1_2 is configured not to be present. That is, this type of DCI format 1_1 or DCI format 1_2 may be configured to include or not include the TCI state selection field. For a case that the TCI state selection field is configured not to be present, this type of DCI format 1_1 or DCI format 1_2 may not include the TCI state selection field.

The TCI state selection field may be used to indicate which one or multiple unified TCI states among the K unified TCI states determined based on the second information may be used when the terminal receives the PDSCH and/or the DMRS corresponding to the PDSCH. For example, the TCI state indication field may indicate one or more unified TCI states among the K unified TCI states determined through the second information for use by the terminal when receiving the PDSCH and/or the DMRS corresponding to the PDSCH.

It can be understood that in this case, because the TCI state selection field in the first DCI is configured not to be present, the terminal cannot determine the M unified TCI states based on the first DCI. The terminal may determine the M unified TCI states based on the RRC configuration or the default rule.

In some embodiments, for DCI format 1_1 or DCI format 1_2, assuming that the network device does not configure this type of DCI to indicate which one or more unified TCI states for the terminal to use when receiving the PDSCH and/or the DMRS corresponding to PDSCH, and assuming the terminal supports using multiple default beams, the terminal may directly use the default beams to receive the PDSCH and/or the DMRS corresponding to PDSCH.

In some embodiments, in a case that the PDSCH is a PDSCH scheduled through the first DCI, and/or the DMRS corresponding to the PDSCH is the DMRS corresponding to the PDSCH scheduled through the first DCI, and the first DCI is DCI format 1_1 or DCI format 1_2 and the TCI state selection field in the first DCI is configured not to be present, the terminal may support receiving the PDSCH and/or the DMRS corresponding to the PDSCH using a default beam. The terminal may determine M unified TCI states based on the RRC configuration or the default rule.

In some embodiments, the PDSCH and/or the DMRS corresponding to the PDSCH may be: the PDSCH scheduled based on a second DCI and/or the DMRS corresponding to PDSCH. In other words, the PDSCH is the PDSCH scheduled through the second DCI; and/or, the DMRS corresponding to PDSCH is the DMRS corresponding to the PDSCH scheduled through the second DCI. A time interval between the second DCI and the PDSCH and/or the DMRS corresponding to the PDSCH is smaller than a time threshold, and the DCI format corresponding to the second DCI is DCI format 1_0, DCI format 1_1, or DCI format 1_2.

For example, the network device configures the PDSCH and/or the DMRS corresponding to the PDSCH scheduled based on DCI format 1_0, DCI format 1_1, or DCI format 1_2. The TCI state selection field in DCI format 1_1 or DCI format 1_2 may be configured to be present. That is, this type of DCI format 1_1 or DCI format 1_2 may be configured to include or not include the TCI state selection field. For a case that the TCI state selection field is configured to be present, this type of DCI format 1_1 or DCI format 1_2 may include the TCI state selection field. However, the time interval between the terminal receiving the second DCI and receiving the PDSCH is smaller than a preset time interval; and/or, the time interval between the terminal receiving the second DCI and receiving the DMRS corresponding to the PDSCH is smaller than a preset time interval. The preset time interval may be the time required for the terminal to decode the second DCI; and/or, the preset time interval may be the time required for the terminal to prepare unified TCI state(s). The unified TCI state(s) involved in the time required for the terminal to prepare unified TCI state(s) may be the unified TCI state(s) used when receiving the PDSCH and/or the DMRS corresponding to the PDSCH. This means that if the terminal cannot normally decode the second DCI and/or prepare the corresponding unified TCI state(s) before receiving the PDSCH and/or the DMRS corresponding to the PDSCH, the terminal cannot know the M unified TCI states indicated by the DCI. Therefore, the terminal may determine the M unified TCI states based on the RRC configuration or the default rule.

It can be understood that since the terminal cannot decode the second DCI and/or cannot prepare the corresponding unified TCI state(s) in this case, the second DCI may include the TCI state selection field indicating M unified TCI states, or may not include the TCI state selection field. In other words, the second DCI may be DCI format 1_0, DCI format 1_1, or DCI format 1_2.

In some embodiments, in a case that the terminal cannot normally decode the second DCI and/or prepare the corresponding unified TCI state(s) before receiving the PDSCH and/or the DMRS corresponding to the PDSCH, the terminal may support receiving the PDSCH and/or the DMRS corresponding to the PDSCH using a default beam. The terminal may determine M unified TCI states based on the RRC configuration or the default rule.

The present disclosure is applicable to various cases that multiple unified TCI states are determined through the RRC configuration or the default rule. Thus, in a case that the number of NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, the terminal expects to receive third information which is used to indicate the terminal not to perform selection among the N NZP CSI-RS resources.

In some embodiments, the terminal expects to receive third information sent by the network device. The third information may be used to indicate the terminal not to perform selection among the N NZP CSI-RS resources.

For example, the third information and the first information may be same information. That is, the first information received by the terminal may indicate the N NZP CSI-RS resources included in a CMR, and may also indicate that the terminal does not need to perform selection among the N NZP CSI-RS resources.

For example, the terminal may want the network device to indicate the terminal not to select resource(s) from the N NZP CSI-RS resources. In this way, the terminal may perform the downlink communication based on N NZP CSI-RS resources. Since one NZP CSI-RS resource corresponds to one TRP or one TRP group, the terminal may use M unified TCI states to receive the PDSCH sent by N TRPs or N groups of TRPs, and/or to receive the DMRS corresponding to the PDSCH sent by N TRPs or N groups of TRPs.

For example, the terminal may perform CSI measurement and CSI feedback based on N TRPs or N groups of TRPs.

It can be understood that in the embodiment, the terminal expects the network device to give a restriction, that is, the terminal expects the network device to restrict the terminal from performing resource selection from the NZP CSI-RS resources.

In the present disclosure, the terminal expects the network device not to indicate the terminal to perform selection among NZP CSI-RS resources included in a CMR, so as to receive a downlink channel or reference signal sent by different TRPs using multiple unified TCI states, thereby improving downlink communication performance.

In the downlink communication method provided in an embodiment of the present disclosure, the terminal does not receive third information which is used to indicate not to perform selection among the N NZP CSI-RS resources. The method may further include: selecting Q NZP CSI-RS resources from the N NZP CSI -RS resources, where Q is a positive integer greater than 1, and Q is smaller than or equal to N.

In some embodiments, in a case that the terminal does not receive the third information, it means that the network device does not indicate the terminal not to perform selection among the N NZP CSI-RS resources. Therefore, the terminal may perform selection from the N NZP CSI-RS resources.

For example, the terminal selects Q NZP CSI-RS resources from N NZP CSI-RS resources, where Q is smaller than or equal to N, and Q is a positive integer greater than 1.

In a case that the network device does not indicate the terminal not to perform selection among N NZP CSI-RS resources, it means that the terminal can perform selection among the N NZP CSI-RS resources. Therefore, when the terminal performs selection among the N NZP CSI-RS resources, the terminal needs to select more than one N NZP CSI-RS resource. That is, the terminal needs to select multiple NZP CSI -RS resources from the N NZP CSI-RS resources. For example, the terminal may select Q NZP CSI-RS resources from the N NZP CSI-RS resources.

In some embodiments, the terminal may report the selected Q NZP CSI-RS resources to the network device. For example, the terminal may send to the network device information indicating the selected Q NZP CSI-RS resources, so that the network device knows which Q NZP CSI-RS resources the terminal has selected. The network device may conduct downlink communication (i.e., send PDSCH and/or the DMRS corresponding to the PDSCH) with the terminal based on the Q NZP CSI-RS resources selected by the terminal. The terminal may receive the PDSCH and/or the DMRS corresponding to the PDSCH based on the selected Q NZP CSI-RS resources. Furthermore, the terminal may perform CSI measurement and CSI feedback based on the selected Q NZP CSI-RS resources.

It can be understood that in this embodiment, the network device does not give a restriction on the terminal, that is, the network device does not restrict the terminal from performing selection among the NZP CSI-RS resources. The terminal can select Q NZP CSI-RS resources from N NZP CSI-RS resources, while ensuring that Q is greater than 1. This avoids the situation where only one NZP CSI-RS resource is selected but multiple unified TCI states are configured.

In the present disclosure, in a case that the network device does not indicate the terminal not to perform selection among the NZP CSI-RS resources included in a CMR, the terminal selects multiple NZP CSI-RS resources from N NZP CSI-RS resources, so as to receive, using multiple unified TCI states, a downlink channel or reference signal sent by different TRPs, thereby improving downlink communication performance.

In the downlink communication method provided in an embodiment of the present disclosure, the unified TCI state includes at least one of the following: a joint TCI state; at least one of an uplink TCI state and a downlink TCI state.

In some embodiments, the unified TCI state includes the joint TCI state.

The joint TCI state may be used for both a downlink communication and an uplink communication.

In some embodiments, the unified TCI state includes the downlink TCI state.

In some embodiments, the unified TCI state includes the uplink TCI state.

Of course, it should be understood that in a case that the terminal receives the PDSCH and/or the DMRS corresponding to the PDSCH, the unified TCI state cannot only include the uplink TCI state.

In some embodiments, the unified TCI state includes the downlink TCI state and the uplink TCI state.

The present disclosure provides various forms of the unified TCI state. By configuring the number of NZP CSI-RS resources included in a CMR to be multiple and determining to use multiple unified TCI states to receive a downlink channel or reference signal, the downlink communication performance can be improved.

Based on the same concept, the present disclosure further provides a downlink communication method performed by a network device.

FIG. 6 is a flowchart of another downlink communication method according to an example embodiment. As shown in FIG. 6, the method may be performed by a network device. The method may include the following steps:
In step S51, first information is sent.

In some embodiments, the network device may send the first information. The first information is used to configure a CMR. The CMR includes N NZP CSI-RS resources, where N is a positive integer greater than 1.

In some embodiments, the first information may be referred to as indication information, first indication information, configuration information, resource configuration information, etc., and the present disclosure does not limit the name of the first information.

In some embodiments, the network device may send the first information to the terminal. The first information configures N NZP CSI-RS resources included in a CMR. This allows the terminal to determine, based on the first information, the N NZP CSI-RS resources included in the CMR configured by the network device.

In some embodiments, the terminal is configured with a PDSCH CJT scheme. Regarding the specific CJT scheme, reference can be made to the description of the corresponding embodiments at the terminal side, and repeated will be omitted here.

In step S52, a PDSCH and/or a DMRS corresponding to the PDSCH is(are) sent using M unified TCI states.

In some embodiments, the network device may use the M unified TCI states to send the PDSCH and/or the DMRS corresponding to the PDSCH to the terminal, where M is a positive integer greater than 1, and M is smaller than or equal to N.

For example, the network device uses the M unified TCI states to send the PDSCH and/or the DMRS corresponding to the PDSCH to the terminal through different TRPs. The unified TCI state(s) used when sending the PDSCH and/or the DMRS corresponding to the PDSCH through different TRPs may be the same or different.

In some embodiments, N NZP CSI-RS resources correspond to N TRPs. The network device may use a part or all of the N TRPs, and send the PDSCH and/or the DMRS corresponding to the PDSCH to the terminal using M unified TCI states.

In some embodiments, the M unified TCI states are two unified TCI states.

It can be understood that by configuring a CMR to include multiple NZP CSI-RS resources and configuring the terminal to use multiple unified TCI states to receive the PDSCH and/or the DMRS corresponding to the PDSCH sent through different TRPs, the present disclosure can avoid the situation that a CMR configures only one NZP CSI-RS resource but multiple unified TCI states are determined.

In the present disclosure, by configuring a CMR to include multiple NZP CSI-RS resources and determining to use multiple unified TCI states to receive a downlink channel or reference signal, the downlink communication performance can be improved.

In the downlink communication method provided in an embodiment of the present disclosure, FIG. 7 is a flowchart of yet another downlink communication method according to an example embodiment. As shown in FIG. 7, the method further includes the following step:
In step S61, second information is sent.

In some embodiments, the network device may further send second information. The second information is used to determine K unified TCI states. The M unified TCI states may be a subset of the K unified TCI states, where K is a positive integer greater than 1.

For example, the network device sends the second information to the terminal. The second information indicates the K unified TCI states, so that the terminal may determine the K unified TCI states configured by the network device based on the second information.

For example, the second information directly indicates the M unified TCI states, that is, the K unified TCI states determined through the second information are equal to the M unified TCI states. In other words, K may be equal to M.

For another example, the M unified TCI states are a proper subset of the K unified TCI states, that is, the second information is used to determine the K unified TCI states. The K unified TCI states are more than the M unified TCI states. In other words, K is greater than M.

In some embodiments, the K unified TCI states determined through the second information are two unified TCI states, i.e., K is equal to 2.

In the present disclosure, the network device can indicate the use of multiple unified TCI states to receive a downlink channel or reference signal, thereby improving downlink communication performance in a case that a CMR is configured to include multiple NZP CSI-RS resources.

In the downlink communication method provided in an embodiment of the present disclosure, the second information is used to indicate the K unified TCI states.

It can be understood that regarding embodiments in which the second information indicates the K unified TCI states, reference may be made to the descriptions of the corresponding embodiments at the terminal side and their associated embodiments, and repeated descriptions will be omitted here.

The present disclosure can directly indicate multiple unified TCI states through a piece of second information, so that in a case that the number of NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, sending the second information may further include: sending L pieces of second information.

In some embodiments, the network device may send multiple pieces of second information, such as L pieces of second information, where L is a positive integer greater than 1. The first L-1 pieces of second information are used to indicate one or more unified TCI states, and the L^{th} piece of second information is used to indicate one unified TCI state.

For example, the network device sends L pieces of second information. The L^{th} piece of second information is used to indicate one unified TCI state. The first L-1 pieces of second information may indicate one or more unified TCI states, respectively.

For example, L pieces of second information may three pieces of second information: second information 1, second information 2, and second information 3. The second information 1 may indicate a unified TCI state, i.e., unified TCI state 1. The second information 2 may indicate a unified TCI state, i.e., unified TCI state 2. The second information 3 may indicate a unified TCI state, i.e., a new unified TCI state 2. Alternatively, the second information 1 may indicate a unified TCI state, i.e., unified TCI state 1. The second information 2 may indicate two unified TCI states, i.e., unified TCI state 2 and unified TCI state 3. The second information 3 may indicate a unified TCI state, i.e., a new unified TCI state 2. As a further example, the second information 1 may indicate two unified TCI states, i.e., unified TCI state 1 and unified TCI state 2. The second information 2 may indicate two unified TCI states, i.e., unified TCI state 3 and unified TCI state 4. The second information 3 may indicate a unified TCI state, i.e., a new unified TCI state 2.

In some embodiments, the unified TCI state indicated by the L^{th} piece of second information may be used to update one or more unified TCI states indicated by the first L-1 pieces of second information, to obtain K unified TCI states.

For example, L pieces of second information may be three pieces of second information: second information 1, second information 2, and second information 3. The second information 1 may indicate a unified TCI state, i.e., unified TCI state 1. The second information 2 may indicate a unified TCI state, i.e., unified TCI state 2. The second information 3 may indicate a unified TCI state, i.e., a new unified TCI state 2. In this case, the unified TCI states indicated by the first two pieces of second information may be determined as unified TCI state 1 and unified TCI state 2. Using the new unified TCI state 2 indicated by second information 3 to update the unified TCI state 2 determined through the first two pieces of second information, K updated unified TCI states are obtained, i.e., unified TCI state 1 and the new unified TCI state 2.

As another example, L pieces of second information may be three pieces of second information: second information 1, second information 2, and second information 3. The second information 1 may indicate a unified TCI state, i.e., unified TCI state 1. The second information 2 may indicate two unified TCI states, i.e., unified TCI state 2 and unified TCI state 3. The second information 3 may indicate a unified TCI state, i.e., a new unified TCI state 2. In this case, the unified TCI states indicated by the first two pieces of second information may be determined as unified TCI state 1, unified TCI state 2, and unified TCI state 3. Using the new unified TCI state 2 indicated by second information 3 to update the unified TCI state 2 determined through the first two pieces of second information, K updated unified TCI states are obtained, i.e., unified TCI state 1, the new unified TCI state 2, and unified TCI state 3.

As a further example, L pieces of second information may be three pieces of second information: second information 1, second information 2, and second information 3. The second information 1 may indicate a unified TCI state, i.e., unified TCI state 1. The second information 2 may indicate two unified TCI states, i.e., unified TCI state 2 and unified TCI state 3. The second information 3 may indicate a unified TCI state(s), i.e., unified TCI state 4. In this case, the unified TCI states indicated by the first two pieces of second information may be determined as unified TCI state 1, unified TCI state 2, and unified TCI state 3. Using the unified TCI state 4 indicated by the second information 3 to update the unified TCI states determined through the first two pieces of second information, K updated unified TCI states are obtained, i.e., unified TCI state 1, unified TCI state 2, unified TCI state 3, and unified TCI state 4.

It can be understood that in the above examples, in a case that the L^{th} piece of second information indicates only one unified TCI state, a unified TCI state corresponding to the unified TCI state indicated by the L^{th} piece of second information among the one or more unified TCI states determined through the first L-1 pieces of second information is update using the unified TCI state indicated by the L^{th} piece of second information, and the remaining unified TCI states may remain unchanged.

In the present disclosure, multiple unified TCI states can be indicated through multiple pieces of second information, so that in a case that the number of N NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, the second information is carried by a first MAC CE. At least one unified TCI state indicated by the first MAC CE corresponds to a codepoint in the TCI state indication field carried in a DCI.

It can be understood that regarding the embodiments in which the second information is carried by the first MAC CE, reference can be made to the descriptions of the corresponding embodiments at the terminal side and their associated embodiments, and repeated descriptions will be omitted here.

The present disclosure provides a possible implementation of the second information, so that in a case that the number of NZP CSI-RS resources included in a CMR is configured as multiple, multiple unified TCI states determined through the second information are used to receive a downlink channel or reference signal, thereby improving downlink communication performance.

In the downlink communication method provided in an embodiment of the present disclosure, the second information is carried by a second MAC CE and a DCI. The second MAC CE is used to indicate at least one unified TCI state corresponding to each of multiple codepoints corresponding to the TCI state indication field carried in the DCI. The TCI state indication field carried in the DCI is used to indicate one of the multiple codepoints.

It can be understood that regarding the embodiments in which the second information is carried by the second MAC CE and the DCI, reference can be made to the descriptions of the corresponding embodiments and their associated embodiments at the terminal side, and repeated descriptions will be omitted here.

The present disclosure provides a possible implementation of the second information, so that in a case that the number of NZP CSI-RS resources included in a CMR is configured as multiple, multiple unified TCI states determined through the second information are used to receive a downlink channel or reference signal, thereby improving downlink communication performance.

The downlink communication method provided in an embodiment of the present disclosure may further include: sending RRC signaling, wherein the RRC signaling is used to configure M unified TCI states; or, determining M unified TCI states based on a default rule, wherein a first condition is used to indicate that the terminal cannot determine the unified TCI state(s) corresponding to the PDSCH and/or the DMRS corresponding to the PDSCH based on the DCI.

In some embodiments, the network device may send the RRC signaling. The RRC signaling is used to configure M unified TCI states. The first condition is used to indicate that the terminal cannot determine the unified TCI state(s) corresponding to the PDSCH and/or the DMRS corresponding to the PDSCH based on the DCI.

For example, in a case that the terminal cannot determine the unified TCI state(s) corresponding to the PDSCH and/or the DMRS corresponding to the PDSCH based on the DCI, the network device may send the RRC signaling to the terminal, so as to configure the M unified TCI states for the terminal through the RRC signaling.

For example, the network device may send the RRC signaling to the terminal in advance, and the RRC signaling configures that the terminal receives the PDSCH and/or the DMRS corresponding to the PDSCH based on the M unified TCI states. The M unified TCI states configured in the RRC signaling are the M unified TCI states among the K unified TCI states determined through the second information. In a case that the terminal cannot determine the unified TCI state(s) corresponding to the PDSCH and/or the DMRS corresponding to the PDSCH based on the DCI, the terminal can determine the M unified TCI states based on the RRC signaling.

In some embodiments, the M unified TCI states are determined based on a default rule.

For example, the default rule may predefine that the terminal receives the PDSCH and/or the DMRS corresponding to the PDSCH based on M unified TCI states. The M unified TCI states predefine by the default rule are the M unified TCI states among the K unified TCI states determined through the second information. The network device may determine the M unified TCI states based on the default rule. In some cases, the network device may determine the second information based on the determined M unified TCI states, to indicate the M unified TCI states to the terminal.

For example, in a case that a first condition is met, the network device determines M unified TCI states based on the default rule. The network device may determine the RRC signaling based on the M unified TCI states and send the RRC signaling to the terminal to configure the M unified TCI states through RRC.

For another example, the network device determines the M unified TCI states based on the default rule. The network device may determine one or more pieces of second information based on the M unified TCI states, so as to indicate the M unified TCI states to the terminal through the one or more pieces of second information. Alternatively, the network device indicates, to the terminal, K unified TCI states including the M unified TCI states through the one or more pieces of second information.

In the present disclosure, multiple unified TCI states can be determined through the RRC configuration or the default rule, so that in a case that the number of NZP CSI-RS resources included in a CMR is configured as multiple, the multiple unified TCI states can be used to receive a downlink channel or reference signal, thereby improving downlink communication performance.

In the downlink communication method provided in an embodiment of the present disclosure, the PDSCH and/or the DMRS corresponding to the PDSCH is(are) at least one of the following: the PDSCH scheduled based on DCI format 1_0 and/or the DMRS corresponding to the PDSCH; the PDSCH scheduled based on a first DCI and/or the DMRS corresponding to the PDSCH, wherein a TCI state selection field in the first DCI is configured not to be present and a DCI format corresponding to the first DCI is DCI format 1_1 or DCI format 1_2; the PDSCH scheduled based on a second DCI and/or the DMRS corresponding to the PDSCH, wherein a time interval between the second DCI and the PDSCH and/or the DMRS corresponding to the PDSCH is smaller than a time threshold, and the DCI format corresponding to the second DCI is DCI format 1_0, DCI format 1_1, or DCI format 1_2.

It can be understood that regarding embodiments in which possible situations of the first condition are provided, reference can be made to the descriptions of the corresponding embodiments at the terminal side and their associated embodiments, and repeated descriptions will be omitted here.

The present disclosure is applicable to various situations where multiple unified TCI states are determined through the RRC configuration or the default rule, so that in a case that the number of NZP CSI-RS resources included in a CMR is configured as multiple, the multiple unified TCI states can be used to receive a downlink channel or reference signal, thereby improving downlink communication performance.

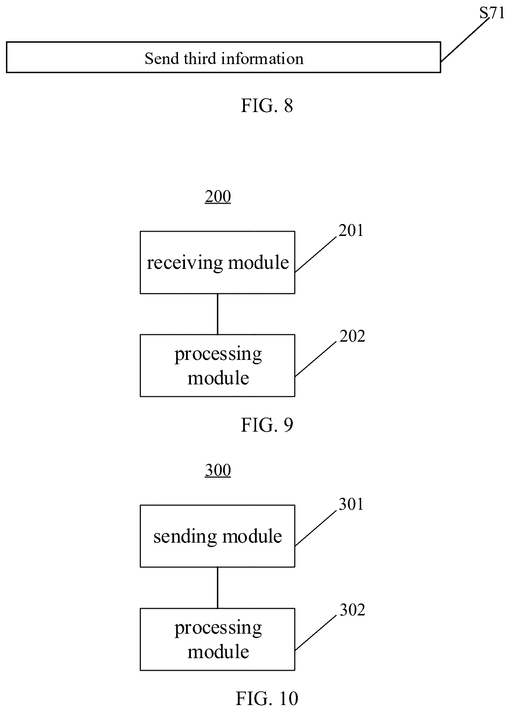

In the downlink communication method provided in an embodiment of the present disclosure, FIG. 8 is a flowchart of yet another downlink communication method according to an example embodiment. As shown in FIG. 8, the method may further include the following step:
In step S71, third information is sent.

In some embodiments, the network device sends the third information to the terminal. The third information may be used to indicate the terminal not to perform selection among the N NZP CSI-RS resources.

For example, the third information and the first information may be the same information. That is, the first information may indicate the N NZP CSI-RS resources included in a CMR, and may also indicate that the terminal does not need to perform selection from the N NZP CSI-RS resources.

For example, the network device indicates the terminal not to perform selection from N NZP CSI-RS resources. In this way, the terminal may perform downlink communication based on the N NZP CSI-RS resources. Since one NZP CSI-RS resource corresponds to one TRP or one TRP group, the terminal may use M unified TCI states to receive the PDSCH sent by N TRPs or N groups of TRPs, and/or receive the DMRS corresponding to the PDSCH sent by the N TRPs or N groups of TRPs.

For example, the terminal may perform CSI measurement and CSI feedback based on the N TRPs or N groups of TRPs.

In the present disclosure, the terminal expects the network device not to indicate the terminal to perform selection from the NZP CSI-RS resources included in a CMR, so that the terminal can use multiple unified TCI states to receive a downlink channel or reference signal sent by different TRPs, thereby improving downlink communication performance.

In the downlink communication method provided in an embodiment of the present disclosure, the unified TCI state includes at least one of the following: a joint TCI state; at least one of an uplink TCI state and a downlink TCI state.

It can be understood that regarding embodiments of configuring the unified TCI state(s), reference can be made to the descriptions of the corresponding embodiments at the terminal side and their associated embodiments, and repeated descriptions will be omitted here.

The present disclosure provides various forms of the unified TCI state. By configuring the number of NZP CSI-RS resources included in a CMR to be multiple and determining to use multiple unified TCI states to receive a downlink channel or reference signal, the downlink communication performance can be improved.

It should be noted that those skilled in the art will understand that the various implementations/embodiments described above in the present disclosure can be used in conjunction with the foregoing embodiments, or they can be used independently. Whether used independently or in conjunction with the foregoing embodiments, the implementation principle is similar. In the present disclosure, a part of embodiments are described as being implemented together. Of course, those skilled in the art will understand that such illustrative examples are not intended to limit the embodiments of the present disclosure.

Based on the same concept, embodiments of the present disclosure also provide a downlink communication apparatus or device.

It can be understood that in order to achieve the above-mentioned functions, the downlink communication apparatus or device provided in the embodiments of the present disclosure include hardware structures and/or software modules corresponding to execution of respective functions. In conjunction with units and algorithm steps of various examples disclosed in the embodiments of the present disclosure, the embodiments of the present disclosure can be implemented in hardware or a combination of hardware and computer software. Whether a function is implemented by hardware or by computer software driving hardware depends on the specific application and design constraints of the technical solutions. Those skilled in the art can use different methods to implement the described functions for each specific application, but such implementations should not be considered beyond the scope of the technical solutions of the embodiments of the present disclosure.

FIG. 9 is a schematic diagram of a downlink communication apparatus according to an example embodiment. Referring to FIG. 9, the apparatus 200 includes: a receiving module 201 configured to receive first information, where the first information is used to configure a CMR, and the CMR includes N NZP CSI-RS resources, where N is a positive integer greater than 1; a processing module 202 configured to determine that unified TCI state(s) corresponding to a PDSCH and/or a DMRS corresponding to the PDSCH is(are) M unified TCI states, where M is a positive integer greater than 1, and M is smaller than or equal to N; the receiving module 201 is further configured to receive the PDSCH and/or the DMRS corresponding to the PDSCH using the M unified TCI states.

In the present disclosure, by configuring a CMR to include multiple NZP CSI-RS resources and determining to use multiple unified TCI states to receive a downlink channel or reference signal, the downlink communication performance can be improved.

In some implementations, the receiving module 201 is further configured to: receive second information, where the second information being used to determine K unified TCI states, the M unified TCI states are a subset of the K unified TCI states, where K is a positive integer greater than 1.

In the present disclosure, the network device indicates the use of multiple unified TCI states to receive a downlink channel or reference signal, so that in a case that the number of NZP CSI-RS resources included in a CMR is configured as multiple, the downlink communication performance can be improved.

In some implementations, the second information is used to indicate the K unified TCI states.

The present disclosure can directly indicate multiple unified TCI states through a piece of second information, so that in a case that the number of NZP CSI-RS resources included in a CMR is configured as multiple, the multiple unified TCI states can be used to receive a downlink channel or reference signal, thereby improving downlink communication performance.

In some implementations, the receiving module 201 is further configured to receive L pieces of second information, where L is a positive integer greater than 1. The first L-1 pieces of second information are used to indicate one or more unified TCI states, and the L^{th} piece of second information is used to indicate one unified TCI state. The processing module 202 is further configured to update the one or more unified TCI states indicated by the first L-1 pieces of second information using the unified TCI state indicated by the L^{th} piece of second information, to obtain K unified TCI states.

The present disclosure can indicate multiple unified TCI states through multiple pieces of second information, so that in a case that the number of NZP CSI-RS resources included in a CMR is configured as multiple, the multiple unified TCI states can be used to receive a downlink channel or reference signal, thereby improving downlink communication performance.

In some implementations, the second information is carried by a first Medium Access Control Control Element (MAC CE). At least one unified TCI state indicated by the first MAC CE corresponds to a codepoint in a TCI state indication field carried in Downlink Control Information (DCI).

The present disclosure provides a possible implementation of the second information. Thus, in a case that the number of NZP CSI-RS resources included in a CMR is configured as multiple, the multiple unified TCI states determined through the second information are used to receive a downlink channel or reference signal, thereby improving downlink communication performance.

In some implementations, the second information is carried by a second MAC CE and a DCI. The second MAC CE is used to indicate at least one unified TCI state corresponding to each of multiple codepoints corresponding to a TCI state indication field carried in the DCI. The TCI state indication field carried in the DCI is used to indicate one of the multiple codepoints.

The present disclosure provides a possible implementation of the second information. Thus, in a case that the number of NZP CSI-RS resources included in a CMR is configured as multiple, multiple unified TCI states determined through the second information are used to receive a downlink channel or reference signal, thereby improving downlink communication performance.

In some implementations, the processing module 202 is further configured to: determine the M unified TCI states based on a Radio Resource Control (RRC) configuration or a default rule.

The present disclosure can determine multiple unified TCI states through the RRC configuration or the default rule. Thus, in a case that the number of NZP CSI-RS resources included in a CMR is configured as multiple, the multiple unified TCI states can be used to receive a downlink channel or reference signal, thereby improving downlink communication performance.

In some implementations, the PDSCH and/or the DMRS corresponding to the PDSCH is at least one of the following: the PDSCH scheduled based on DCI format 1_0 and/or the DMRS corresponding to the PDSCH; the PDSCH scheduled based on a first DCI and/or the DMRS corresponding to the PDSCH, wherein a TCI state selection field in the first DCI is configured not to be present, and a DCI format corresponding to the first DCI is DCI format 1_1 or DCI format 1_2; the PDSCH scheduled based on a second DCI and/or the DMRS corresponding to the PDSCH, wherein a time interval between the second DCI and the PDSCH and/or the DMRS corresponding to the PDSCH is smaller than a time threshold, and the DCI format corresponding to the second DCI is DCI format 1_0, DCI format 1_1 or DCI format 1_2.

The present disclosure is applicable to various cases that multiple unified TCI states are determined through the RRC configuration or the default rule. Thus, in a case that the number of NZP CSI-RS resources included in a CMR is configured as multiple, the multiple unified TCI states can be used to receive a downlink channel or reference signal, thereby improving downlink communication performance.

In some implementations, the terminal expects to receive third information which is used to indicate the terminal not to perform selection among the N NZP CSI-RS resources.

In the present disclosure, the terminal expects the network device not to indicate the terminal to perform selection among NZP CSI-RS resources included in a CMR, so that the terminal can receive a downlink channel or reference signal sent by different TRPs using multiple unified TCI states, thereby improving downlink communication performance.

In some implementations, the terminal does not receive the third information which is used to indicate not to perform selection among the N NZP CSI-RS resources. The processing module 202 is further configured to: select Q NZP CSI-RS resources from the N NZP CSI-RS resources, where Q is a positive integer greater than 1 and Q is smaller than or equal to N.

In the present disclosure, in a case that the network device does not indicate the terminal not to perform selection among the NZP CSI-RS resources included in a CMR, the terminal selects multiple NZP CSI-RS resources from N NZP CSI-RS resources, so as to receive, using multiple unified TCI states, a downlink channel or reference signal sent by different TRPs, thereby improving downlink communication performance.

In some implementations, the unified TCI state includes at least one of the following: a joint TCI state; at least one of an uplink TCI state and a downlink TCI state.

The present disclosure provides various forms of the unified TCI state. By configuring the number of NZP CSI-RS resources included in a CMR to be multiple and determining to use multiple unified TCI states to receive a downlink channel or reference signal, the downlink communication performance can be improved.

FIG. 10 is a schematic diagram of another downlink communication apparatus according to an example embodiment. Referring to FIG. 10, the apparatus 300 includes: a sending module 301 configured to send first information, where the first information is used to configure a CMR, and the CMR includes N NZP CSI-RS resources, where N is a positive integer greater than 1; the sending module 301 is further configured to send a PDSCH and/or a DMRS corresponding to PDSCH using M unified TCI states, where M is a positive integer greater than 1, and M is smaller than or equal to N.

In the present disclosure, by configuring a CMR to include multiple NZP CSI-RS resources and determining to use multiple unified TCI states to receive a downlink channel or reference signal, the downlink communication performance can be improved.

In some implementations, the sending module 301 is further configured to: send second information, where the second information is used for the terminal to determine K unified TCI states, the M unified TCI states are a subset of K unified TCI states, where K is a positive integer greater than 1.

In the present disclosure, the network device can indicate to use multiple unified TCI states to receive a downlink channel or reference signal, so that in a case that the number of NZP CSI-RS resources included in a CMR is configured as multiple, the downlink communication performance can be improved.

In some implementations, the second information is used to indicate the K unified TCI states.

The present disclosure can directly indicate multiple unified TCI states through a piece of second information, so that in a case that the number of NZP CSI-RS resources included in a CMR is configured as multiple, the multiple unified TCI states can be used to receive a downlink channel or reference signal, thereby improving downlink communication performance.

In some implementations, the sending module 301 is further configured to: send L pieces of second information, wherein L is a positive integer greater than 1. The first L-1 pieces of second information are used to indicate one or more unified TCI states, the L^{th} piece of second information is used to indicate one unified TCI state, and the unified TCI state indicated by the L^{th} piece of second information is further used to update the one or more unified TCI states indicated by the first L-1 pieces of second information.

In the present disclosure, multiple unified TCI states can be indicated through multiple pieces of second information, so that in a case that the number of NZP CSI-RS resources included in a CMR is configured as multiple, the multiple unified TCI states can be used to receive a downlink channel or reference signal, thereby improving downlink communication performance.

In some implementations, the second information is carried through a first Medium Access Control Control Element (MAC CE). At least one unified TCI state indicated by the first MAC CE corresponds to a codepoint in the TCI state indication field carried in Downlink Control Information (DCI).

The present disclosure provides a possible implementation of the second information, so that in a case that the number of NZP CSI-RS resources included in a CMR is configured as multiple, multiple unified TCI states determined through the second information are used to receive a downlink channel or reference signal, thereby improving downlink communication performance.

In some implementations, the second information is carried by a second MAC CE and a DCI. The second MAC CE is used to indicate at least one unified TCI state corresponding to each of multiple codepoints corresponding to the TCI state indication field carried in the DCI. The TCI state indication field carried in the DCI is used to indicate one of the multiple codepoints.

The present disclosure provides a possible implementation of the second information, so that in a case that the number of NZP CSI-RS resources included in a CMR is configured as multiple, multiple unified TCI states determined through the second information are used to receive a downlink channel or reference signal, thereby improving downlink communication performance.

In some embodiments, the sending module 301 included in the apparatus 300 is further configured to: send Radio Resource Control (RRC) signaling, wherein the RRC signaling is used to configure M unified TCI states; or the apparatus 300 further includes a processing module 302 configured to determine M unified TCI states based on a default rule, wherein a first condition is used to indicate that the terminal cannot determine the unified TCI state(s) corresponding to the PDSCH and/or the DMRS corresponding to the PDSCH based on the DCI.

In the present disclosure, multiple unified TCI states can be determined through the RRC configuration or the default rule, so that in a case that the number of NZP CSI-RS resources included in a CMR is configured as multiple, the multiple unified TCI states can be used to receive a downlink channel or reference signal, thereby improving downlink communication performance.

In some implementations, the PDSCH and/or the DMRS corresponding to the PDSCH is(are) at least one of the following: the PDSCH scheduled based on DCI format 1_0 and/or the DMRS corresponding to the PDSCH; the PDSCH scheduled based on a first DCI and/or the DMRS corresponding to the PDSCH, wherein the TCI state selection field in the first DCI is configured not to be present, and the DCI format corresponding to the first DCI is DCI format 1_1 or DCI format 1_2; the PDSCH scheduled based on a second DCI and/or the DMRS corresponding to the PDSCH, wherein a time interval between the second DCI and the PDSCH and/or the DMRS corresponding to the PDSCH is smaller than a time threshold, and the DCI format corresponding to the second DCI is DCI format 1_0, DCI format 1_1 or DCI format 1_2.

The present disclosure is applicable to various situations where multiple unified TCI states are determined through the RRC configuration or the default rule, so that in a case that the number of NZP CSI-RS resources included in a CMR is configured as multiple, the multiple unified TCI states can be used to receive a downlink channel or reference signal, thereby improving downlink communication performance.

In some implementations, the sending module 301 is further configured to: send third information which is used to indicate the terminal not to perform selection among the N NZP CSI-RS resources.

In the present disclosure, the terminal expects the network device not to indicate the terminal to perform selection from the NZP CSI-RS resources included in a CMR, so that the terminal can use multiple unified TCI states to receive a downlink channel or reference signal sent by different TRPs, thereby improving downlink communication performance.

In some implementations, the unified TCI state includes at least one of the following: a joint TCI state; at least one of an uplink TCI state and a downlink TCI state.

The present disclosure provides various forms of the unified TCI state. By configuring the number of NZP CSI-RS resources included in a CMR to be multiple and determining to use multiple unified TCI states to receive a downlink channel or reference signal, the downlink communication performance can be improved.

It can be understood that the aforementioned apparatus 200 may further include a sending module for implementing steps related to sending by the apparatus 200; and the apparatus 300 may further include a receiving module for implementing steps related to receiving by the apparatus 300. Of course, the apparatus 200 and the apparatus 300 may also include more possible modules to achieve corresponding functions, and the present disclosure does not limit this.

Regarding the apparatus in the above embodiments, the specific manner in which each module performs operations has been described in detail in the embodiments related to the methods, and will not be elaborated here.

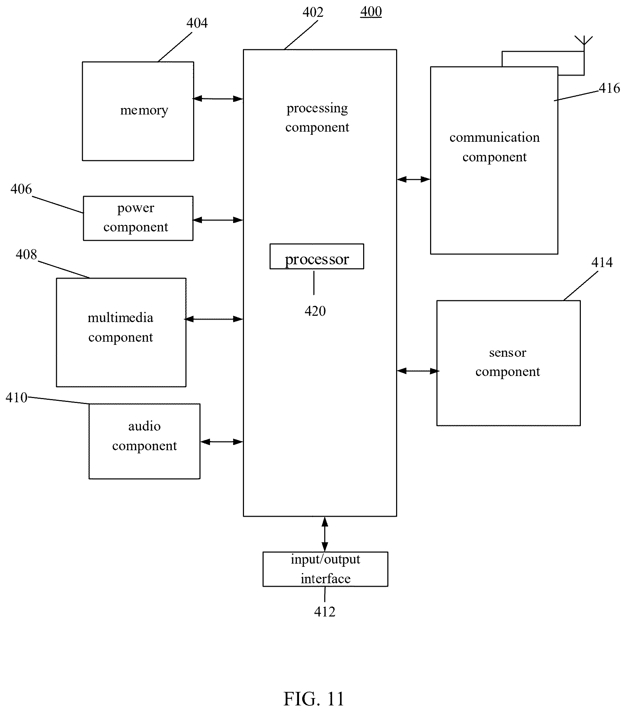

FIG. 11 is a schematic diagram of a downlink communication device according to an example embodiment. For example, the device 400 may be any terminal such as, a mobile phone, a computer, digital broadcast user equipment, a messaging device, a gaming console, a tablet, a medical device, exercise equipment, a personal digital assistant, etc.

Referring to FIG. 11, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one example embodiment, the communication component 416 receives a broadcast signal or broadcast associated information from an external broadcast management system via a broadcast channel. In one example embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 404 including instructions executable by the processor 420 in the device 400, for performing the above-described methods. For example, the non-transitory computer-readable storage medium may be a ROM, a Random Access Memory (RAM), a CD-ROM, a magnetic tape, a floppy disc, an optical data storage device, and the like.

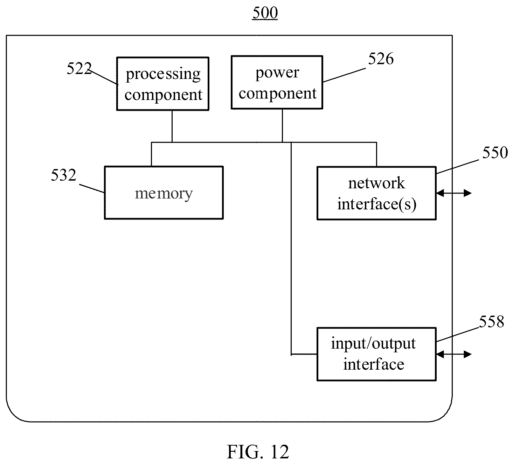

FIG. 12 is a schematic diagram of another downlink communication device according to an example embodiment. For example, the device 500 may be provided as a base station or a server. Referring to FIG. 12, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above methods.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

In the present disclosure, for PDSCH CJT transmission, when a CMR for CJT is configured as including multiple NZP CSI-RS resources and the default beams are two indicated TCI states, the present disclosure gives base station restriction(s) or UE behavior restriction(s), thereby improving the PDSCH-CJT transmission performance.

It can be further understood that "multiple" in the present disclosure refers to two or more, and other quantifiers are similar. The expression "and/or" describes an association relationship between related objects, indicating that three relationships can exist. For example, A and/or B can represent: A alone, A and B exist simultaneously, and B alone. The character "/" generally indicates that the associated objects before and after the character are in an "or" relationship. The singular forms "a/an", "said", and "the" are also intended to include plural forms unless the context clearly indicates otherwise.

It can be further understood that the terms "first", "second", etc., are used to describe various types of information, but the information should not be limited to the terms. These terms are only used to distinguish information of the same type from one another, and do not indicate a specific order or degree of importance. In fact, the expressions "first", "second", etc., are completely interchangeable. For example, without departing from the scope of the present disclosure, first information may also be referred to as second information, and similarly, second information may also be referred to as first information.

It can be further understood that the meaning of words such as "in response to", "if", etc. used in the present disclosure depends on the context and the actual usage scenario. For example, the word "in response to" as used herein may be interpreted as "when", or "at the time of...", or "if", or "in a case that...".

It can be further understood that although operations are described in a specific order in the accompanying drawings in the embodiments of the present disclosure, this should not be construed as requiring the operations to be performed in the specific order shown in the drawings or in a serial order, or requiring all of the shown operations to be performed to obtain desired result(s). In a specific environment, multitasking and parallel processing may be advantageous.

Other implementations of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

## Claims

1. A downlink communication method, performed by a terminal, the method comprising:
receiving first information, wherein the first information is used to configure a Channel Measurement Resource (CMR), the CMR comprises N Non-Zero Power Channel State Information Reference Signal (NZP CSI-RS) resources, where N is a positive integer greater than 1;
determining that a unified Transmission Configuration Indication (TCI) state corresponding to a Physical Downlink Shared Channel (PDSCH) and/or a Demodulation Reference Signal (DMRS) corresponding to the PDSCH is M unified TCI states, where M is a positive integer greater than 1 and M is smaller than or equal to N; and
receiving the PDSCH and/or the DMRS corresponding to the PDSCH using the M unified TCI states.

2. The method according to claim 1, further comprising:
receiving second information, wherein the second information is used to determine K unified TCI states, the M unified TCI states are a subset of the K unified TCI states, and K is a positive integer greater than 1.

3. The method according to claim 2, wherein the second information is used to indicate the K unified TCI states.

4. The method according to claim 2 or 3, wherein receiving the second information comprises:
receiving L pieces of second information, where L is a positive integer greater than 1, the first L-1 pieces of second information are used to indicate one or more unified TCI states, and an L^{th} piece of second information is used to indicate one unified TCI state;
wherein the method further comprises:
updating the one or more unified TCI states indicated by the first L-1 pieces of second information using the unified TCI state indicated by the L^{th} piece of second information, to obtain the K unified TCI states.

5. The method according to any one of claims 2 to 4, wherein the second information is carried by a first Medium Access Control Control Element (MAC CE), and at least one unified TCI state indicated by the first MAC CE corresponds to a codepoint in a TCI state indication field carried in Downlink Control Information (DCI).

6. The method according to any one of claims 2 to 4, wherein the second information is carried by a second MAC CE and a DCI, the second MAC CE is used to indicate at least one unified TCI state corresponding to each of multiple codepoints corresponding to a TCI state indication field carried in the DCI, and the TCI state indication field carried in the DCI is used to indicate one of the multiple codepoints.

7. The method according to claim 1, further comprising:
determining the M unified TCI states based on a Radio Resource Control (RRC) configuration or a default rule.

8. The method according to claim 7, wherein the PDSCH and/or the DMRS corresponding to the PDSCH is at least one of the following:
the PDSCH scheduled based on DCI format 1_0 and/or the DMRS corresponding to the PDSCH;
the PDSCH scheduled based on a first DCI and/or the DMRS corresponding to the PDSCH, wherein a TCI state selection field in the first DCI is configured not to be present, and a DCI format corresponding to the first DCI is DCI format 1_1 or DCI format 1_2;
the PDSCH scheduled based on a second DCI and/or the DMRS corresponding to the PDSCH, wherein a time interval between the second DCI and the PDSCH and/or the DMRS corresponding to the PDSCH is smaller than a time threshold, and the DCI format corresponding to the second DCI is DCI format 1_0, DCI format 1_1 or DCI format 1_2.

9. The method according to any one of claims 1 to 8, wherein the terminal expects to receive third information, the third information is used to indicate the terminal not to perform selection among the N NZP CSI-RS resources.

10. The method according to any one of claims 1 to 8, wherein the terminal does not receive third information which is used to indicate not to perform selection among the N NZP CSI-RS resources, wherein the method further comprises:
selecting Q NZP CSI-RS resources from the N NZP CSI-RS resources, where Q is a positive integer greater than 1 and Q is smaller than or equal to N.

11. The method according to any one of claims 1 to 10, wherein the unified TCI state comprises at least one of:
a joint TCI state; or
at least one of an uplink TCI state and a downlink TCI state.

12. A downlink communication method, performed by a network device, the method comprising:
sending first information, wherein the first information is used to configure a Channel Measurement Resource (CMR), and the CMR comprises N Non-Zero Power Channel State Information Reference signal (NZP CSI-RS) resources, where N is a positive integer greater than 1;
sending a Physical Downlink Shared Channel (PDSCH) and/or a Demodulation Reference Signal (DMRS) corresponding to the PDSCH using M unified Transmission Configuration Indication (TCI) states, wherein M is a positive integer greater than 1, and M is smaller than or equal to N.

13. The method according to claim 12, further comprising:
sending second information, wherein the second information is used for a terminal to determine K unified TCI states, the M unified TCI states are a subset of the K unified TCI states, and K is a positive integer greater than 1.

14. The method according to claim 13, wherein the second information is used to indicate the K unified TCI states.

15. The method according to claim 13 or 14, wherein sending the second information comprises:
sending L pieces of second information;
where L is a positive integer greater than 1, the first L-1 pieces of second information is used to indicate one or more unified TCI states, an L^{th} piece of second information is used to indicate one unified TCI state, and the unified TCI state indicated by the L^{th} piece of second information is further used to update the one or more unified TCI states indicated by the first L-1 pieces of second information.

16. The method according to any one of claims 13 to 15, wherein the second information is carried by a first Medium Access Control Control Element (MAC CE), and at least one unified TCI state indicated by the first MAC CE corresponds to a codepoint in a TCI state indication field carried in Downlink Control Information (DCI).

17. The method according to any one of claims 13 to 15, wherein the second information is carried by a second MAC CE and a DCI, the second MAC CE is used to indicate at least one unified TCI state corresponding to each of multiple codepoints corresponding to a TCI state indication field carried in the DCI, and the TCI state indication field carried in the DCI is used to indicate one of the multiple codepoints.

18. The method according to claim 12, further comprising:
sending Radio Resource Control (RRC) signaling, wherein the RRC signaling is used to configure the M unified TCI states; or,
determining the M unified TCI states based on a default rule.

19. The method according to claim 18, wherein the PDSCH and/or the DMRS corresponding to the PDSCH is at least one of the following:
the PDSCH scheduled based on DCI format 1_0 and/or the DMRS corresponding to the PDSCH;
the PDSCH scheduled based on a first DCI and/or the DMRS corresponding to the PDSCH, wherein a TCI state selection field in the first DCI is configured not to be present, and a DCI format corresponding to the first DCI is DCI format 1_1 or DCI format 1_2;
the PDSCH scheduled based on a second DCI and/or the DMRS corresponding to the PDSCH, wherein a time interval between the second DCI and the PDSCH and/or the DMRS corresponding to the PDSCH is smaller than a time threshold, and the DCI format corresponding to the second DCI is DCI format 1_0, DCI format 1_1 or DCI format 1_2.

20. The method according to any one of claims 12 to 19, further comprising:
sending third information, wherein the third information indicates a terminal not to perform selection among the N NZP CSI-RS resources.

21. The method according to any one of claims 12 to 20, wherein the unified TCI state comprises at least one of:
a joint TCI state; or
at least one of an uplink TCI state and a downlink TCI state.

22. A downlink communication apparatus, comprising:
a receiving module configured to receive first information, wherein the first information is used to configure a Channel Measurement Resource (CMR), the CMR comprises N Non-Zero Power Channel State Information Reference Signal (NZP CSI-RS) resources, and N is a positive integer greater than 1; and
a processing module configured to determine that a unified Transmission Configuration Indication (TCI) state corresponding to a Physical Downlink Shared Channel (PDSCH) and/or a Demodulation Reference Signal (DMRS) corresponding to the PDSCH is M unified TCI states, where M is a positive integer greater than 1 and M is smaller than or equal to N;
wherein the receiving module is further configured to receive the PDSCH and/or the DMRS corresponding to the PDSCH using the M unified TCI states.

23. A downlink communication apparatus, comprising:
a sending module configured send first information, wherein the first information is used to configure a Channel Measurement Resource (CMR), the CMR comprise N Non-Zero Power Channel State Information Reference Signal (NZP CSI-RS) resources, and N is a positive integer greater than 1;
wherein the sending module is further configured to send a Physical Downlink Shared Channel (PDSCH) and/or a Demodulation Reference Signal (DMRS) corresponding to the PDSCH using M unified Transmission Configuration Indication (TCI) states, wherein M is a positive integer greater than 1, and M is smaller than or equal to N.

24. A downlink communication device, comprising:
a processor; and
a memory configured to store instructions executable by the processor;
wherein the processor is configured to perform the method according to any one of claims 1 to 11.

25. A downlink communication device, comprising:
a processor; and
a memory configured to store instructions executable by the processor;
wherein the processor is configured to perform the method according to any one of claims 12 to 21.

26. A non-transitory computer-readable storage medium, wherein when instructions in the storage medium are executed by a processor of a terminal, the terminal is caused to be capable of performing the method according to any one of claims 1 to 11.

27. A non-transitory computer-readable storage medium, wherein when instructions in the storage medium are executed by a processor of a network device, the network device is caused to be capable of performing the method according to any one of claims 12 to 21.
